# EUROPEAN PATENT APPLICATION

(11) **EP 2 759 739 A1**
(43) Date of publication of application: **30.07.2014**
(21) Application number: 12831768.2
(22) Date of filing: 04.09.2012
(51) Int. Cl.: F16H 3/10, F16H 61/04, H02K 7/116

(54) **VEHICULAR MOTOR DRIVE DEVICE AND AUTOMOBILE**

(30) Priority: 13.09.2011 JP 2011199008
(71) Applicant: NTN Corporation, Osaka-shi, Osaka 550-0003 (JP)
(72) Inventor: ISOBE, Fumihiro, Iwata-shi Shizuoka 438-0037 (JP); MAKINO, Tomoaki, Iwata-shi Shizuoka 438-0037 (JP)
(74) Representative: Hirsch & Associés
(86) International application number: PCT/JP2012/072412
(87) International publication number: WO 2013/038942

(57) **Abstract**

A vehicular motor drive device is provided with an electric motor and a speed reducer having two gear trains capable of switching a fixed gear ratio. Driving force curves, which are determined depending on an output characteristic of the motor and represent a relationship between an output rotation speed in the respective gear train and an output torque, which is obtainable maximally at such output rotation speed, have a constant torque curve section, a gradually decreasing torque curve section and a constant speed curve section. The gear trains have respective speed reduction ratios such that the driving force curve of a gear train having a larger speed reduction ratio and the driving force curve of a gear train having a smaller speed reduction ratio continue to and partially overlap with each other in the gradually decreasing torque curve sections.

## Description

### CROSS REFERENCE TO THE RELATED APPLICATION

This application is based on and claims Convention priority to Japanese patent application No. 2011-199008, filed September 13, 2011, the entire disclosure of which is herein incorporated by reference as a part of this application.

### BACKGROUND OF THE INVENTION

### (Field of the Invention)

The present invention relates to a vehicular motor drive device of a type, in which an electric motor is equipped as a drive source and is operable to transmit an output of the motor to a wheel after the speed thereof has been reduced, and also to an automobile having the vehicular motor drive device mounted thereon.

### (Description of Related Art)

The electric motor has such a characteristic that the relationship between the rotation speed and the output torque attains a high efficiency within a certain range. For this reason, it is a common practice to transmit the rotation of such motor to a vehicle wheel through a speed reducer. The speed reduction ratio of the speed reducer referred to above is so determined as to enable it to be used to establish the relationship between output torque and the rotation speed that exhibits an excellent efficiency. However, in the case of automobiles, the range of speeds of travel thereof is so broad enough to encompass a low travelling speed, used at the time of, for example, garage parking to a high travelling speed used at the time of travelling on an express highway. Because of that, with the fixed speed reduction ratio, the motor cannot be driven highly efficiently. In order to eliminate these inconveniences, a suggestion has been made to use a speed reducer of a type capable of changing the speed reduction ratio in two stages, that is, a speed change gear such as disclosed in, for example, the patent document 1 listed below.

### [Prior Art Document]

### [Patent Document]

Patent Document 1: JP Laid-open Patent Publication No. 2011-58534

### SUMMARY OF THE INVENTION

As discussed above, it has been suggested to enable the speed reduction ratio to be changed in two stages in the vehicular motor drive device. It has, however, been found that no solution has not yet been suggested as to what relation has to be set up among the speed reduction ratios in respective stages.

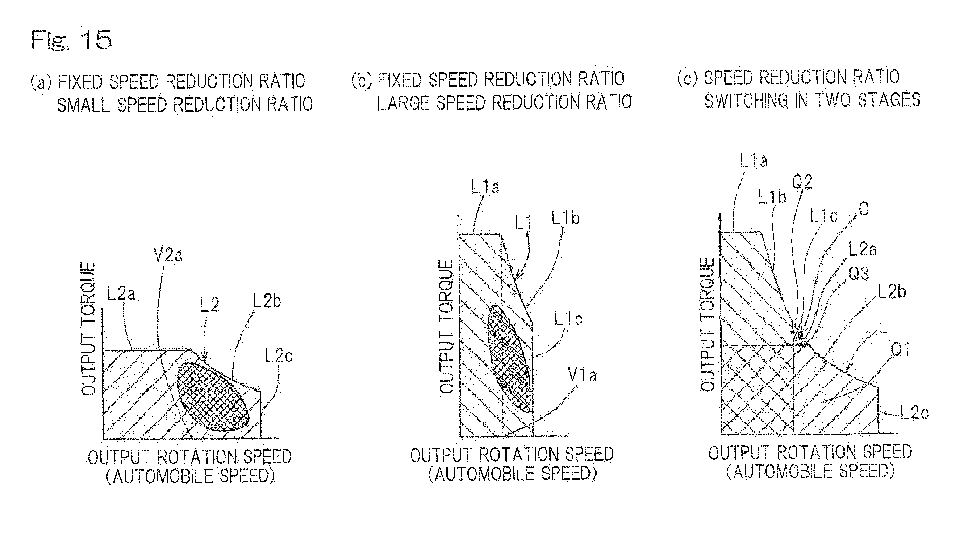

Diagrams (a) to (c) of Fig. 15 illustrate examples of relationships between the output rotation speed in each of gear trains of the speed reducer, which is determined depending on the output characteristic of the electric motor, and the maximum output torque that can be obtained at such output rotation speed. The output rotation speed referred to above may be regarded as a vehicle speed. Diagram (a) of Fig. 15 shows a case where the speed reduction ratio is low (high speed is prioritized), while diagram (b) of Fig. 15 shows a case where the speed reduction ratio is high (low speed and high torque is prioritized).

Driving force curves L1 (shown in diagram (a) of Fig. 15) and L2 (shown in diagram (b) of Fig. 15), which represent the relationship between the output rotation speed and the output torque, generally include, as shown, constant torque curve sections L1a and L2a, in which the maximum torque at which the respective gear train outputs are maximized are sustained, during a region from the zero output rotation speed to torque reduction start velocities V1a and V2a; gradually decreasing torque curve sections L1b and L2b, in which during a region from the torque reduction start velocities V1a and V2a to the maximum rotation speeds the output torque gradually decreases as the output rotation speed increases; and constant speed curve sections L1c and L2c at which the constant output rotation speed is assumed with the output torque attaining the minimum value at the maximum rotation speed. Within areas inwardly of those driving force curves L1 and L2 (Point of origin side: Hatched areas), the motor is driven to assume the relationship between the output torque and the rotation speed that is appropriate to various travelling conditions. Cross-hatched areas in each of those figures generally represent an area in which the motor exhibits a high efficiency.

When the speed reduction ratio is low as shown in diagram (a) of Fig. 15, since a high speed travelling is possible, and the output torque is low, it is applicable to the case in which the high speed is prioritized. When the speed reduction ratio is high as shown in diagram (b) of Fig. 15, since a high output torque can be obtained and the travelling speed is low, it is applicable to the case in which the low speed and the high torque are prioritized. If the speed reduction ratio is made switchable in two stages, the travelling becomes possible within a region of the driving force curve L, shown in diagram (c) of Fig. 15, which corresponds to diagrams (a) and (b) of Fig. 15 overlapping relative to each other.

However, unless the relationship between the speed reduction ration in the case of the small speed reduction ratio and the speed reduction ration in the case of the large speed reduction ratio is properly set up, as shown in diagram (c), the gradually decreasing torque curve sections L1b and L2b in the driving force curve L will become so discontinuous as to result in a discontinuous region C (a dotted area) which is a region that continues to the constant speed curve section L1c and the constant torque curve section L2a. This discontinuous region C is a region of the relationship between the rotation speed and the output torque, which cannot be obtained as a speed reducer output. In the case of the speed reduction ration that results in this discontinuous region C, in the event that, for example, the motor is driven under a condition indicated by a point Q1 in diagram (c) of Fig. 15, no problem results in even if a speed changing operation is carried out, but in the event that traveling takes place under a condition on the driving force curve L or proximate to a position along the driving force curve L such as the condition indicated by a point Q2 or a point Q3, the speed changing operation if taking place at that time will result in an abrupt torque change. For this reason, no smooth speed changing operation can be carried out and the travelling amenity will be impaired. Particularly, where acceleration takes place abruptly from a low speed traveling to a high speed traveling, such as occurring during the passage across, for example, a toll gate in an express way or the like, no smooth acceleration cannot take place under the influence of the discontinuous region C referred to above.

In view of the foregoing, a primary object of the present invention is to provide a vehicular motor drive device of a kind having a speed changing function of a plurality of stages, in which without accompanying any abrupt torque change at the time of changing the speed reduction ratio, an electrically operated motor, even though it is small in size, can be smoothly accelerated and can also travel at a high speed, which can provide a comfortable traveling, and in which by the optimum gear selection, a motor drive of a high efficiency can be accomplished. Another object of the present invention is to provide an electrically powered automobile and a hybrid automobile which have a speed changing function of a plurality of states at which the motor output is reduced, in which without accompanying any abrupt torque change at the time of changing the speed reduction ratio, an electrically operated motor, even though it is small in size, can be smoothly accelerated and can also travel at a high speed, which can provide a comfortable traveling, and in which by the optimum gear selection, a motor drive of a high efficiency can be accomplished. Hereinafter, the summary of the present invention will be described with the aid of reference numerals employed in the accompanying drawings that illustrate show embodiments of the present invention.

A vehicular motor drive device herein provided in accordance with the present invention is a device A including an electric motor 10; and a speed reducer 20 interposed in a torque transmission system provided between the electric motor 10 and a vehicle wheel 1, the speed reducer 20 including a mechanism to switch the torque transmission path among a plurality of gear trains 23, 24 having different speed reduction ratios, each of the gear trains 23, 24 having a fixed speed reduction ratio;
in which driving force curves L1, L2 that are determined depending on an output characteristic of the motor 10, each of those driving force curves representing a relationship between an output rotation speed in the respective gear train and an output torque, which is obtainable maximally at the output rotation speed, each driving force curves L1, L2 including a constant torque curve section L1a, L2a, in which a maximum torque that is maximal as a respective gear train output of the respective gear train, is sustained, during a period ranging from the zero output rotation speed to a certain predetermined torque decrease start speed V1a, V2a; a gradually decreasing torque curve section L1b, L2b, in which the output torque gradually decrease as the output rotation speed increases, during a period ranging from the torque decrease start speed V1a, V2a to the maximum rotation speed; and a constant speed curve section L1c, L2c, in which the output torque attains the minimum value and the output rotation speed attains constant, at the maximum rotation speed; and
in which the gear trains 23, 24 have respective speed reduction ratios such that the driving force curve L1 of the gear train 23 having a larger speed reduction ratio and the driving force curve L2 of the gear train 24 having a smaller speed reduction ratio continue to and partially overlap at overlapping portion Lba with each other in the gradually decreasing torque curve sections L1b, L2b.

When the number of the gear trains is three or more, the gear train having larger speed reduction ratio and the gear train having smaller speed reduction ratio, both referred to above, are intended to mean, of the three or more gear trains, the gear train having larger speed reduction ratio and the gear train having smaller speed reduction ratio between the two gear trains having their speed reduction ratios that are different from each other by one stage.

According to the construction above, since the speed reducer 20 is made changeable in a plurality of stages, the motor 10, even though it is compact in side, can undergo an abrupt acceleration and a high speed travelling and the vehicular motor drive device A that is compact in size and light in weight can be presented. In particular, since the speed reducer 20 is so designed as to have a speed reduction ratio in which the driving force curve L1 of the gear train 23 on the large speed reduction ration side and the driving force curve L2 of the gear train 24 having smaller speed reduction ratio are continuous with the overlapping portion Lba where the gradually decreasing torque curve sections L1b and L2c overlap with each other, without being accompanied by an abrupt torque change at the time of switching of the speed reduction ratio, the motor 10 even though compact in size can be accelerated smoothly from a low speed region to a high speed region and a comfortable travelling can be appreciated. Moreover, in the relationship between the output rotation speed and the output torque, a high efficiency region H expands and by the selection of an optimum gear train, the motor drive of a high efficiency can be accomplished.

In one embodiment of the present invention, the mechanism to switch the torque transmission path among the plurality of the gear trains 23 and 24 of the speed reducer 20 may be a change gear ratio selector mechanism 50 operable to switch the torque transmission path through selective engagement and disengagement of a clutch. In the case of the type in which the switching is carried out by the selective engagement and disengagement of the clutch, an effect that the driving force curve L1 of the gear train 23 having larger speed reduction ratio and the driving force curve L2 of the gear train 24 having smaller speed reduction ratio are continuous with the overlapping portion Lba where the gradually decreasing torque curve sections L1b and L2c overlap with each other, will become more effective. The clutch referred to above may be, for example, either roller clutches 30A and 30B or dog clutches (not shown). With the roller clutches 30A or 30B or the dog clutches (not shown), the switching is possible even through difference in rotation exists between a drive side and a driven side, but in the case of such clutch, an effect of having the speed reduction ratios continuous at the overlapping portion Lba will become more effective.

In another embodiment of the present invention, the vehicular motor drive device of the present invention may include a differential gear 80 for dividing and transmitting an output of the speed reducer 20 to left and right vehicle wheels 1, 1 of a vehicle. In this case, the vehicle may make use of the only motor 10 as a travelling drive source. While the vehicular motor drive device A of the present invention can be applicable to where the vehicle wheel 1 is individually driven, in order to secure the stable travelling characteristic relative to the switching of the speed reduction ratio, it is more effective where the left and right vehicle wheels 1 and 1 are particularly driven by the single motor 10.

In a further embodiment of the present invention, the motor 10 referred to above may be an interior permanent magnet synchronous motor. The interior permanent magnet synchronous motor has various excellent performances as a motor for vehicle travelling, but if a construction is employed in accordance with the present invention, in which the switching of the speed reduction ratio takes place in a plurality of stages, more effective drive can be accomplished.

The present invention also provides an electrically operated automobile EV which makes use of the vehicular motor drive device A of any of the foregoing structure designed in accordance with the present invention. According to the electrically operated automobile EV of the structure referred to above, due to the vehicular motor drive device A of the present invention being mounted, even with the compact motor 10 acceleration and high speed travelling are possible and by an optimum gear selection, a high efficient motor drive can be accomplished and, also, a comfortable travelling can be accomplished without being accompanied by an abrupt torque change during the gear switching.

The present invention furthermore provides a hybrid automobile HV in which one of left and right front vehicle wheels 1 and 1, provided at a front of the vehicle, and left and right rear vehicle wheels 2 and 2, provided at a rear of the vehicle, are driven by an engine and the other of the left and right front vehicle wheels and the left and right rear vehicle wheels are driven by the vehicular motor drive device A of any of the foregoing structure designed in accordance with the present invention. According to the hybrid automobile HV of the structure referred to above, due to the vehicular motor drive device A of the present invention being mounted, even the use of the compact motor 10 makes it possible to accomplish a smooth acceleration and a high speed travelling even with the use of the compact motor 10 and, by an optimum gear selection, a high efficient motor drive can be accomplished and, also, a comfortable travelling can be accomplished without being accompanied by an abrupt torque change during the gear switching.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is an explanatory diagram showing a conceptual construction of a vehicular motor drive device designed in accordance with a embodiment of the present invention;
Fig. 1B contains diagrams (a) to (c) which show respective characteristic charts each depicting the relationship between a rotation speed of an output, in which each gear train thereof and the gear train are combined, and an output torque;
Fig. 2 includes diagrams (a) to (c) illustrate respective characteristic charts each showing the relationship between the rotation speed and the torque output and a high efficiency region;
Fig. 3 includes diagrams (A) and (B) as explanatory diagrams showing comparisons between the size of an outer appearance of a vehicular motor drive device of a type, having a speed reduction ration that is fixed, and the vehicular motor drive device designed according to the embodiment;
Fig. 4A is a schematic top plan view of an electrically powered automobile employing the motor drive device according to the embodiment;
Fig. 4B is a schematic top plan view of a hybrid automobile employing the motor drive device designed according to the embodiment;
Fig. 5 is a longitudinal sectional view showing the vehicular motor drive device designed according to the embodiment;
Fig. 6 is a sectional view showing, on an enlarged scale, of an important portion of a speed change gear shown in Fig. 5;
Fig. 7 is a cross sectional view taken along the line VII-VII in Fig. 6;
Fig. 8 is a cross sectional view taken along the line VIII-VIII in Fig. 6;
Fig. 9 is a longitudinal sectional view showing a change gear ratio selector mechanism;
Fig. 10 is a cross sectional view taken along the line X-X in Fig. 6;
Fig. 11 is a cross sectional view showing a portion of Fig. 9 on an enlarged scale;
Fig. 12 is a longitudinal sectional view showing a speed changing condition;
Fig. 13 is an exploded view showing an inner ring a retainer, a switch spring and an elastic member of the change gear ratio selector mechanism, a washer and a friction plate of a two-way roller clutch;
Fig. 14 is a longitudinal sectional view showing one example of a motor used in the vehicular motor drive device; and
Fig. 15 includes diagrams (a) to (c) illustrating respective characteristic charts each showing the relationship between the output rotation speed and the output torque in the speed reducer of two speed changing type according to the suggested example.

### DESCRIPTION OF EMBODIMENTS

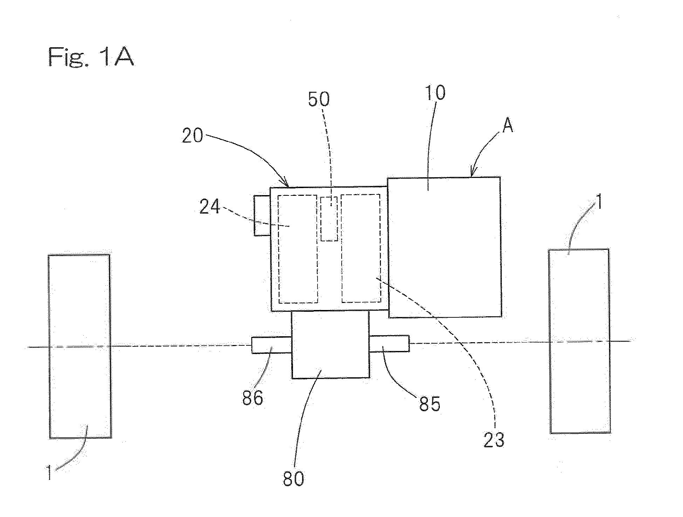

One embodiment of the present invention will now be described in detail with reference to the accompanying drawings. As shown in Fig. 1A, a vehicular motor drive device A includes an electric motor 10, and a speed reducer 20 interposed in a torque transmission system provided between the motor 10 and vehicle wheels 1 and 1. The speed reducer 20 in turn includes two gear trains 23 and 24 having smaller and larger speed reduction ratio, respectively, which are fixed speed reduction ratios, and a torque transmission path can be switched between those two gear trains 23 and 24 by means of a change gear ratio selector mechanism 50. The change gear ratio selector mechanism 50 referred to above is of a type capable of switching the changing ratio by coupling and decoupling a clutch as will be described later. An output of the speed reducer 20 is divided and transmitted to the left and right vehicle wheels 1 and 1 by a differential gear 80. The motor 10 is a synchronous motor such as, for example, an interior permanent magnet synchronous motor.

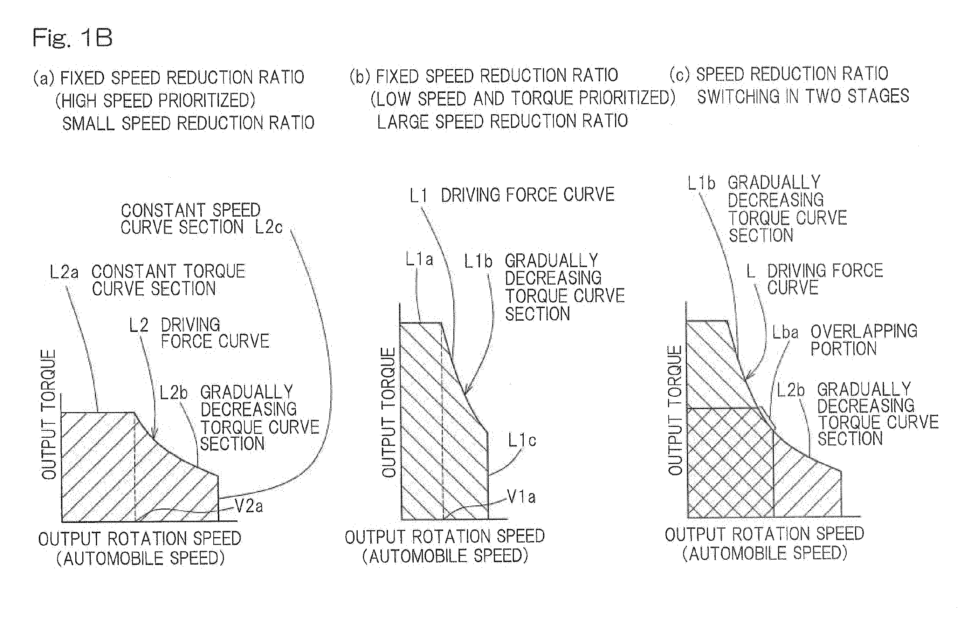

Driving force curves L2 and L1, each showing the relationship between the output rotation speed in each of the gear trains on the smaller speed reduction ratio and the larger speed reduction ratio, and the output torque that exhibits the maximum value at such output rotation speed, are shown in diagrams (a) and (b) of Fig. 1B, respectively. Those driving force curves L1 and L2 are determined in dependence on the output characteristic of the motor 10 and the speed reduction ratio, and includes respectively, constant torque curve sections L1a and L2a, in which the maximum torques that are maximal for the associated gear train outputs, are sustained, during a period in which the output rotation speed ranges from zero to certain predetermined torque reduction start speeds V1a and V2a; gradually decreasing torque curve sections L1b and L2b are exhibited in which the output torques gradually decrease as the rotation speed increases during a period from the torque reduction start velocities V1a and V2a to the maximum rotation speed; and constant speed curve sections L1c and L2c are exhibited in which the rotation speeds are constant when the output torques attain minimum values at the maximum rotation speeds.

The two gear trains 23 and 24 referred to above are such that the relationship between the respective speed reduction ratios are so chosen that, as shown in diagram (c) of Fig. 1B, the driving force curve L1 of the gear train 23 having the larger speed reduction ratio and the driving force curve L2 of the gear train 24 having the smaller speed reduction ratio may continue to each other and partially overlap with each other with an overlapping portion Lba in the gradually decreasing torque curve sections L1b and L2b. In other words, the driving force curves L1 and L2 are so set that they may continue through the overlapping portion Lba at which they overlap with each other.

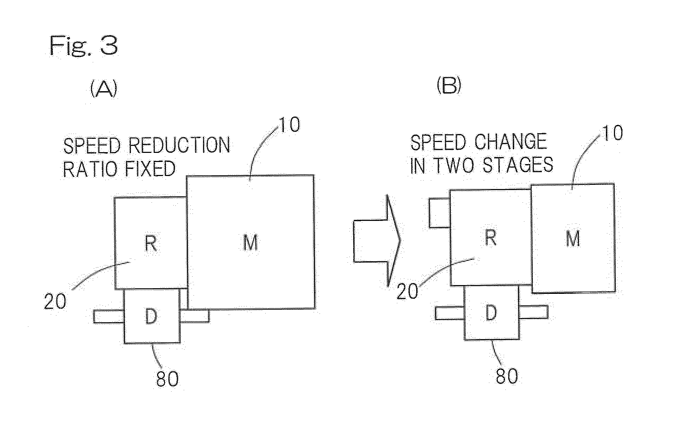

According to the foregoing construction, since the speed reducer 20 is so designed as to be switchable in two stage, even with a compact motor 10, an abrupt acceleration and a high speed travelling become possible and the vehicular motor drive device A which is compact in size and light in weight can be obtained. By way of example, as conceptually shown in diagrams (A) and (B) of Fig. 3, as compared with the use of the speed reducer 20A of a fixed speed reduction ratio as shown in diagram (A) of Fig. 3, the speed reducer 20 having a two stage speed changing capability is, as shown in diagram (B) of Fig. 3, although becoming large in side, such that the motor 10 can be downsized and influences brought about by the downsizing of the motor are rather stronger than those brought about by the increase in size of the speed reducer, and the vehicular motor drive device A as a whole can be made compact in size and light in weight.

Also, in the practice of this embodiment discussed above, since the speed reducer 20 is so designed that the driving force curve L1 of the gear train 23 having larger speed reduction ratio and the driving force curve L2 of the gear train 24 having smaller speed reduction ratio may continue to each other and partially overlap with each other with the overlapping portion Lba where the gradually decreasing torque curve sections L1b and L2b overlap with each other, the abrupt torque change occurring at the time of switching of the speed reduction ratio may be prevented. For this reason, even with the compact motor 10, a smooth acceleration from a low speed region to a high speed region can be enabled and the comfort traveling can be appreciated.

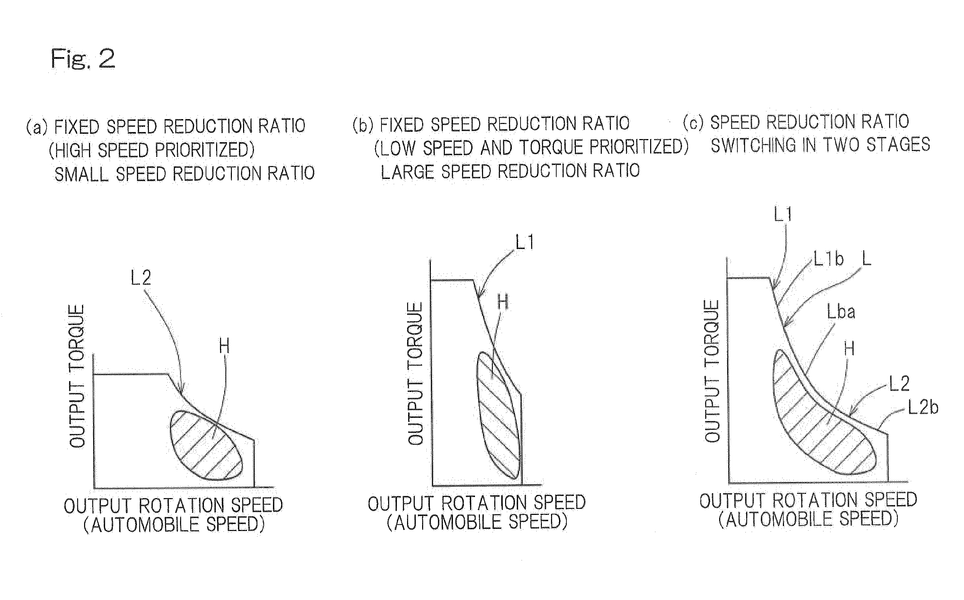

Furthermore, in the relationship between the output rotation speed and the output torque, a high efficiency region expands and a high efficient motor drive can be accomplished by a proper gear selection. By way of example, while high efficiency regions H of the respective gear trains 23 and 24 of the two stages are shown by hatched areas in diagrams (a) and (b) of Fig. 2, in the case that the two stage switching of the gear trains 23 and 24, the high efficiency region H expands as shown in diagram (c) of Fig. 2. Thus, by employing the proper two stage switching, expansion of the high speed travelling region and increase of the driving force (torque) at the low speed region can be obtained and, also, the high efficiency region H expands and the probability of the vehicle being run in the high efficiency region H accordingly increases, allowing it to travel at a low electric power consumption.

In addition, in the practice of the foregoing embodiment, the switching of the torque transmission path between the two gear trains 23 and 24 has been shown and described as accomplished by the change gear ratio selector mechanism 50 which performs coupling and decoupling of the clutch, and where the change gear ratio selector mechanism 50 utilizing such a clutch is employed, such an effect of the fact that the speed reduction ratios are so set that the driving force curve L1 of the gear train 23 having larger speed reduction ratio and the driving force curve L2 of the gear train 24 having smaller speed reduction ratio continues to each other with the overlapping portion Lba at which the gradually decreasing torque curve sections L1b and L2b overlap with each other, becomes further effective.

Also, while the output of the speed reducer 20 is, after having been divided by the differential gear 80, transmitted to the left and right vehicle wheels 1 and 1 through the differential gear 80, the vehicular motor drive device A having the two stage switching designed in accordance with this embodiment is particularly effective where in order to secure the stable travelling capability with respect to the switching of the speed reduction ratio, the single motor is used to drive the left and right vehicle wheels, particularly where the single motor is used to drive the automobile.

Although the motor 10 may be of any arbitrarily chosen type, but the interior permanent magnet synchronous motor is particularly suited in various aspects as that used in driving the automobile. Where the interior permanent magnet synchronous motor is employed, the above described effects of the vehicular motor drive device A of the two stage speed reducing structure designed in accordance with the teachings of this embodiment can be further effectively exhibited.

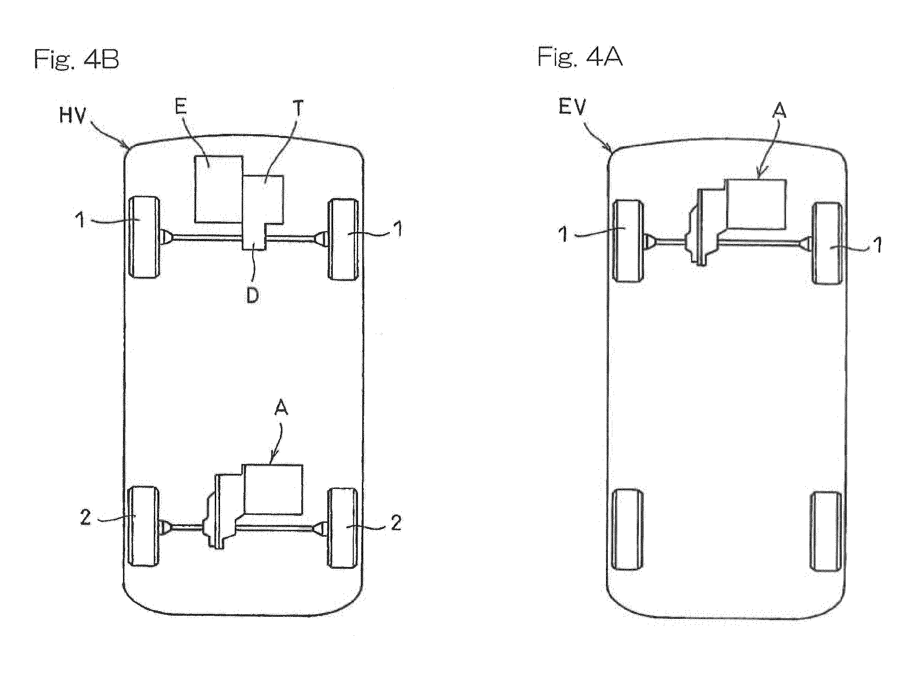

Hereinafter, examples of the automobiles equipped with the respective vehicular motor drive devices each being of the structure described above and examples of specific constructions of, for example, the speed reducer will now be described with particular reference to Figs. 4A and 4B to 14. Fig. 4A illustrates an electrically operated automobile EV of a type in which a pair of the left and right front wheels 1 are driven by the vehicular motor drive device A designed in accordance with the foregoing embodiment. Fig. 4B illustrates a hybrid automobile HV of a type in which a pair of the left and right vehicle wheels 1, which are left and right front drive wheels, are driven by a combustion engine E and a pair of the left and right vehicle wheels 2, which are left and right rear auxiliary drive wheels, are driven by the motor drive device A of the type referred to hereinbefore and in which the rotation of the combustion engine E is transmitted to the vehicle wheels 1, which are the front wheels, through a transmission T and a differential gear D.

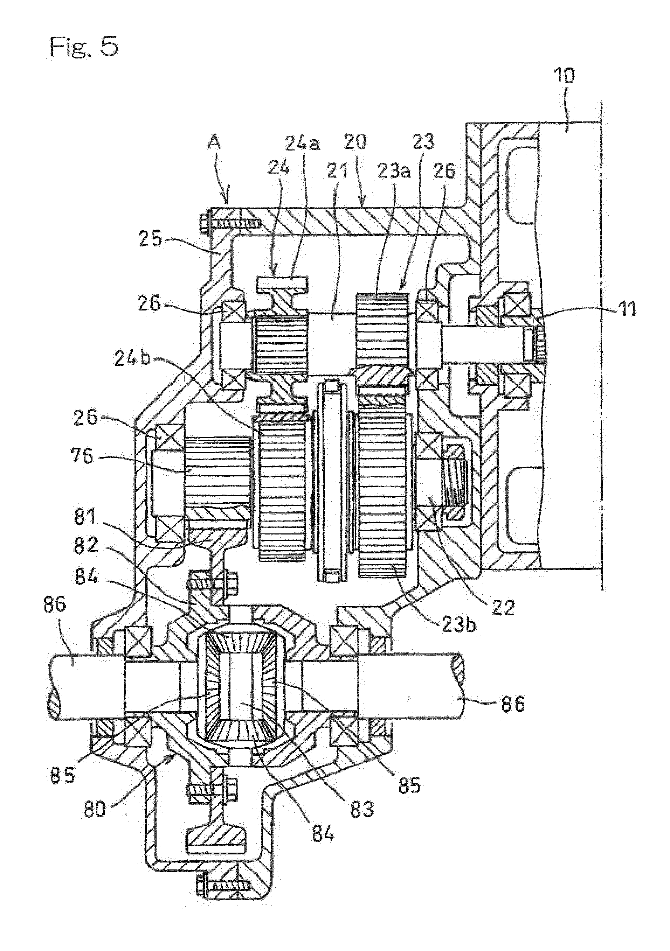

As shown in Fig. 5, the vehicular motor drive device A includes a motor 10, a speed reducer 20 for changing the speed of rotation of an output shaft 11 of the motor 10, and a differential gear 80 for distributing a power, outputted from the speed reducer 20, to a pair of the left and right front vehicle wheels 1 of the electrically operated automobile EV shown in Fig. 4A or to a pair of the left and right rear vehicle wheels 2 of the hybrid automobile HV shown in Fig. 4B.

The speed reducer 20 is a speed change gear of a two stage switching type and in the form of a constantly meshed speed reducer including a first speed reduction gear train 23 of a fixed speed reduction ratio and a second speed reduction gear train 24 of a fixed speed reduction ratio provided between a first shaft 21 and a second shaft 22.

The first shaft 21 and the second shaft 22 are held parallel relative to each other having been rotatably supported by a pair of mutually opposed bearings 26 incorporated in a housing 25 and the first shaft 21 referred to above is drivingly connected with the output shaft 11 of the motor 10.

The first speed reduction gear train 23 is of a structure in which a first input gear 23a is provided on the first shaft 21 and a first output gear 23b meshed with the first input gear 23a is made rotatable about the second shaft 22.

The second speed reduction gear train 24 is of a structure in which a second input gear 24a is provided on the first shaft 21 and a second output gear 24b meshed with the second input gear 24a is made rotatable about the second shaft 22. The second speed reduction gear train 24 has a speed reduction ratio that is smaller than the speed reduction ratio of the first speed reduction gear train 23.

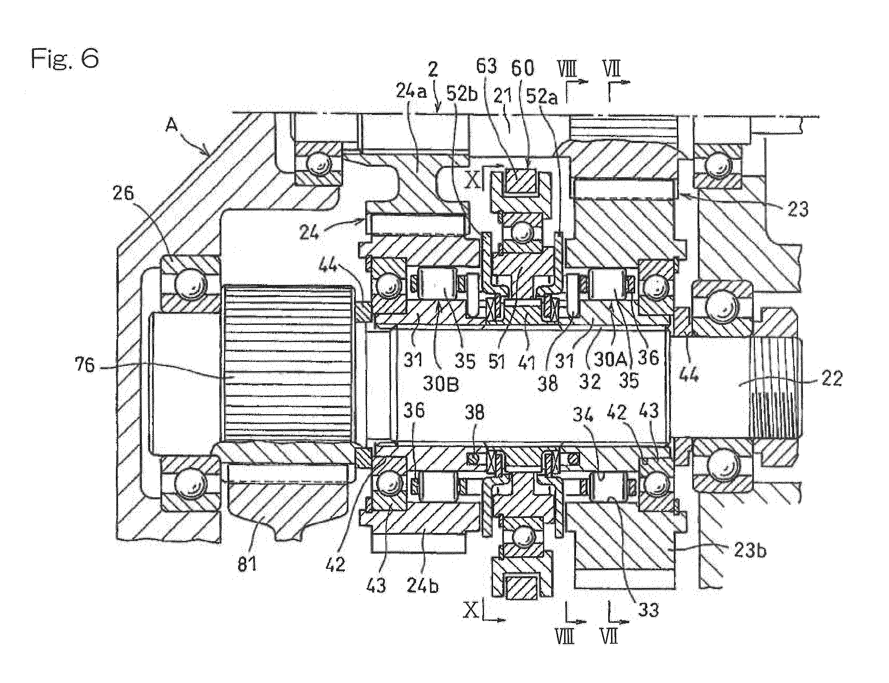

As shown in Figs. 6 to 8, a first two-way roller clutch 30A for selectively coupling the first output gear 23b and the second shaft 22 with each other or decoupling them from each other is incorporated in between the first output gear 23b and the second shaft 22. Also, a second two-way roller clutch 30B for selectively coupling the second output gear 24b and the second shaft 22 with each other or decoupling them from each other is incorporated in between the second output gear 24b and the second shaft 22.

Since the first two-way roller clutch 30A and the second two-way roller clutch 30B are of the same structure and disposed symmetrically relative to each other in the right-left direction in the figure, reference will now be made to only one of those first and second two-way roller clutches, for example, the first two-way roller clutch 30A in the description that follows and, therefore, the details of the second two-way roller clutch 30B are not described for the sake of brevity, it being, however, to be noted that component parts of the second two-way roller clutch 30B, which are similar to those of the first two-way roller clutch 30A, are referred to by like reference numerals that are used in connection with the first two-way roller clutch 30B.

The first two-way roller clutch 30A is of a structure in which an inner ring 31 is mounted on and splined to the second shaft 22 by means of a spline 32 for rotation together therewith, a plurality of flat cam faces 34, which form wedge shaped spaces, each having opposite circumferential ends that are narrower, between it and a cylindrical surface 33 formed in an inner periphery of the first output gear 23b, are formed in circumferentially equidistantly spaced relation to each other, and rollers 35 are incorporated in between the respective cam faces 34 and the cylindrical surface 33 while those rollers 35 are retained by a retainer 36 incorporated in between the first gear 23b and the inner ring 31.

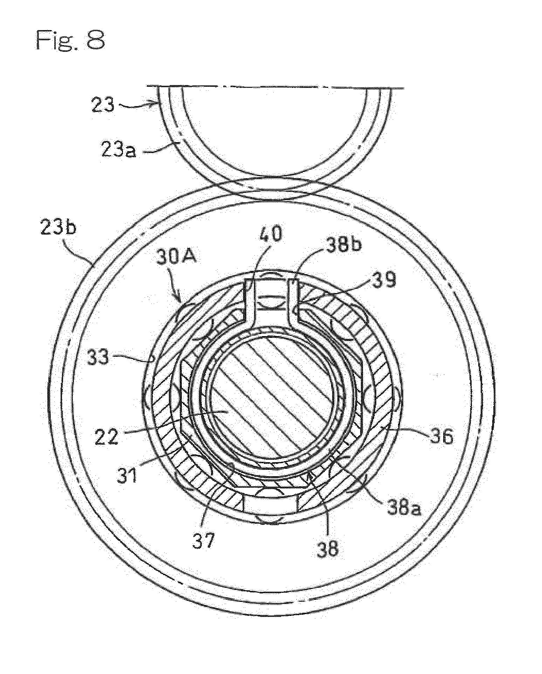

As shown in Fig. 8, a round recess 37 is formed in one axial end face of the inner ring 31, and a round portion 38a of a switch spring 38 is engaged in that recess 37. A pair of pressing pieces 38b provided so as to be oriented outwardly from opposite ends of the round portion 38a is inserted from a cutout 39, formed on an outer peripheral wall of the recess 37, into a cutout portion 40 which is formed in one end face of the retainer 36. A retainer 36 is elastically retained at a neutral position at which the rollers 35 are disengaged from the cam face 34 by causing the pair of the pressing pieces 38b to urge end faces of the cutout 39 and a cutout portion 40, that are opposed to each other in a direction circumferentially of a cutout portion 40, in respective directions opposite to each other.

As shown in Fig. 6, an inner ring 31, incorporated inside of the first output gear 23b, and an inner ring 31, incorporated inside of the second output gear 24b, are axially immovably supported as they are sandwiches from opposite sides by a spacer 41, which is incorporated as a rotatable member between opposed portions thereof, and a pair of stopper rings 44 mounted on the second shaft 22. The spacer 41 is rotatable together with the pair of the opposed inner rings 31.

The pair of the inner rings 31 have respective cylindrical bearing mounting surface areas 42 defined in respective outer end portions that are opposed to the stopper rings 44. The first output gear 23b and the second output gear 24b are rotatably supported by respective bearings 43, which are mounted on the bearing mounting surface areas 42, relative to the inner rings 31.

The first two-way roller clutch 30A and the second two-way roller clutch 30B are such that the coupling and decoupling thereof are controlled by the change gear ratio selector mechanism 50.

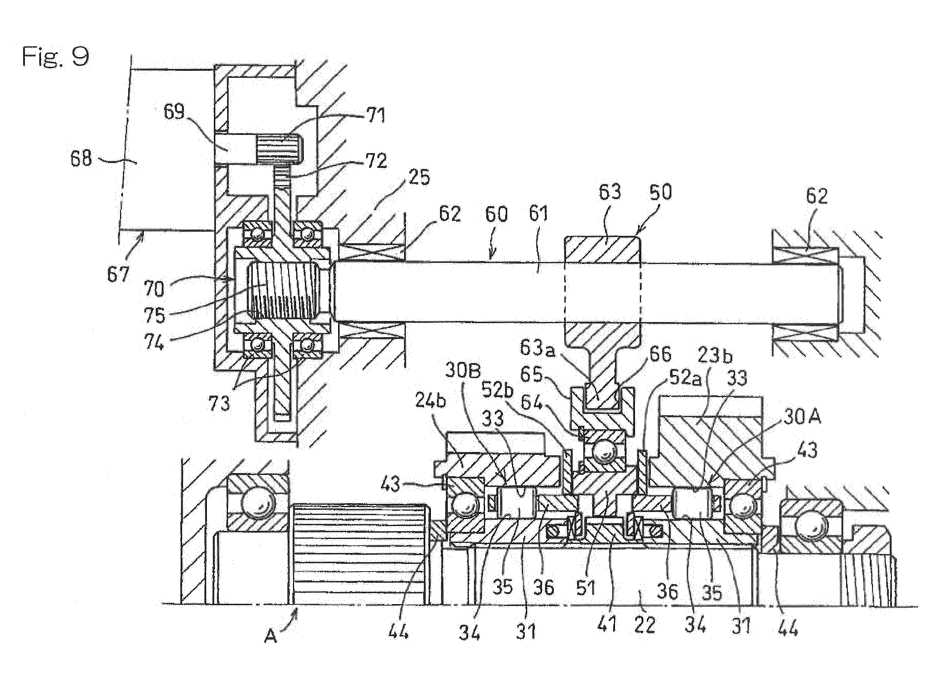

As shown in Fig. 9, the change gear ratio selector mechanism 50 is of such a structure that an axially movable control ring 51 is mounted on and rotatably supported by an outer periphery of the spacer 41, one of a pair of friction plates 52a and 52b, which are disposed on opposite sides of the control ring 51, is non-rotatably retained by the retainer 36 of the first two-way roller clutch 30A while the other of the pair of the friction plates 52a is non-rotatably retained by the retainer 36 of the second two-way roller clutch 30B, the control ring 51 is moved by a shift mechanism 60 towards the first output gear 23b, the retainer 36 is connected with the first output gear 23b by means of a frictional engagement of the friction plate 52a that is urged towards a side face of the first output gear 23b thereof, and the rollers 35 are engaged with the cylindrical surface 33 and the cam face 34 by the relative rotation between the retainer 36 and the inner ring 31.

Arrangement is made so that control ring 51 is moved by the shift mechanism 60 towards the second output gear 24b, the retainer 36 is subsequently connected with the second output gear 24b by the frictional engagement of the friction plate 52b which is then urged against the side face of the second output gear 24b, and the rollers 35 are engaged with the cylindrical surface 33 and the cam face 34 by the relative rotation between the retainer 36 and the inner ring 31.

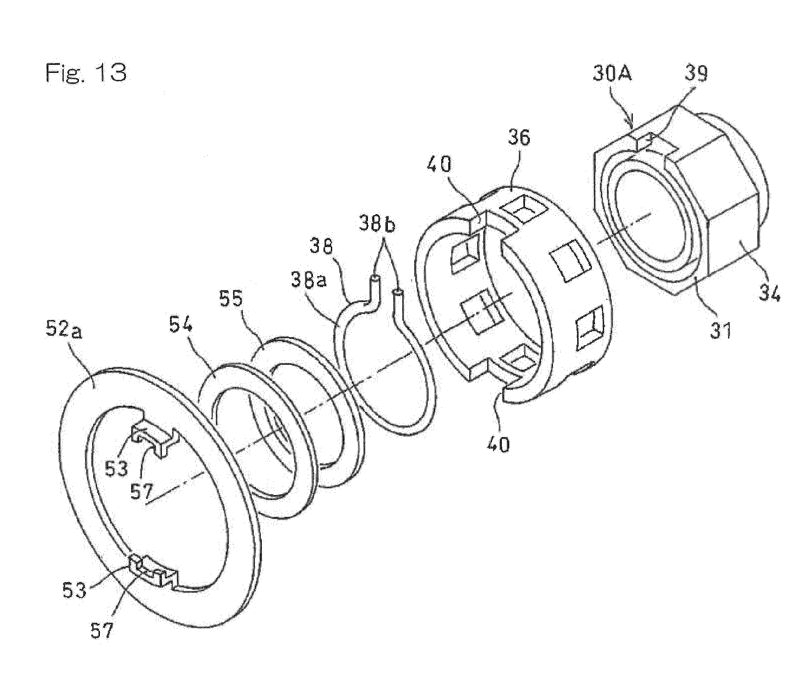

Each of the friction plate 52a and 52b represents an annular shape, and an L-shaped engagement piece 53 formed in an inner diametric surface thereof is engaged in the previously described cutout portion 40 defined in the retainer 36 to allow the friction plates 52a and 52b to be non-rotatably retained by the retainer 36. Also, a washer 54 and an elastic member 55 are assembled in between opposed surfaces of the engagement piece 53 and the inner ring 31 so that by the action of the elastic member 55 the friction plates 52a and 52b can be urged to an engagement release position that is remote from the inner ring 31. Fig. 13 is an exploded view showing the inner ring 31, the retainer 36, the switch spring 38 and the elastic member 55 of the change gear ratio selector mechanism, the washer 54 and the friction plate 52a of the two-way roller clutch 30A. It is to be noted that even the side of the two-way roller clutch 30B is of a structure similar to the side of the two-way roller clutch 30A and is, therefore, not shown and the details thereof are not herein set forth for the sake of brevity.

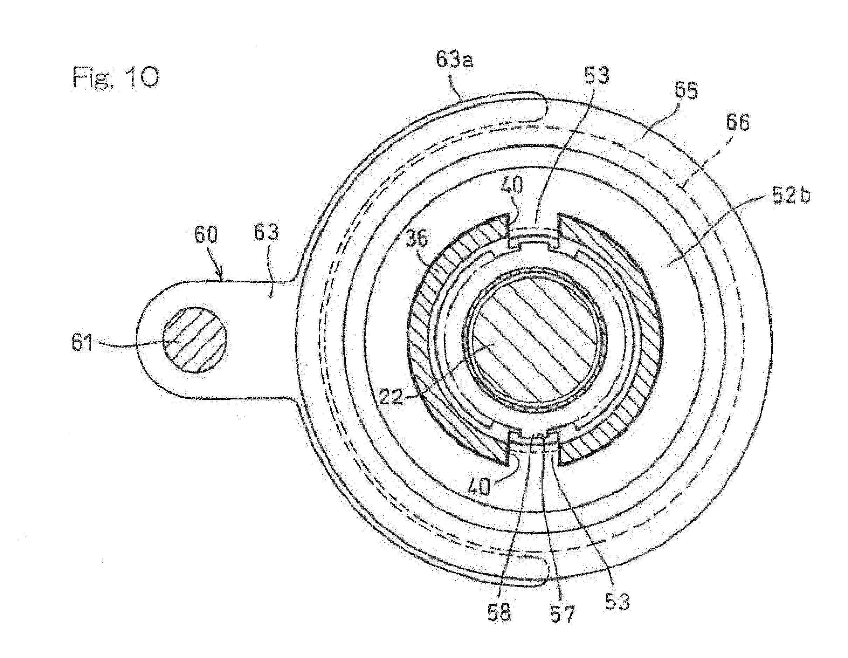

As shown in Fig. 10, an engagement groove 57 is formed in an inner end of the engagement piece 53 and, on the other hand, a plurality of engagement projections 58 cooperable with the engagement groove 57 to form an engagement unit 56 are formed in an outer periphery of the spacer 41. When the friction plates 52a and 52b are moved to the engagement release position referred to above, the engagement groove 57 is engaged with one of the engagement projections 58 to thereby avoid a relative rotation between the inner ring 31, integrated with the spacer 41, and the retainer 36, thereby holding the rollers 35 at the neutral position.

As shown in Fig. 9, the shift mechanism 60 is of such a structure that a shift rod 61 disposed parallel to the second shaft 22 is slidably supported by a pair of slide bearings 62 fitted to the housing 25 and a shift fork 63 is fitted to the shift rod 61, and, on the other hand, a sleeve 65 is rotatably, but axially non-movably supported by a rolling bearing 64 mounted on an outer periphery of the control ring 51, an annular groove 66 is provided in an outer periphery of the sleeve 65, forked pieces 63a at a front end of the shift fork 63 are engaged in the annular groove 66 and the shift rod 61 is axially moved by an actuator 67 to allow the control ring 51 to be axially moved together with the sleeve 65.

For the actuator 67, a cylinder or solenoid that can be connected with the shift rod 61 may be employed, but in the instance now under discussion, a motor 68 is employed, the rotation of the output shaft 69 of the motor 68 is converted by a motion translating mechanism 70 into an axial movement of the shift rod 61.

In other words, arrangement is so made that a driven gear 72 as a nut member is meshed with a drive gear 71 provided on the output shaft 69 of the motor 68, the driven gear 72 is rotatably supported by a pair of opposed bearing 73, and a female screw 74 formed in an inner periphery of the driven gear 72 is meshed with a male screw 75 formed in an end portion outer periphery of the shift rod 61, such that by the rotation of the driven gear 72 at a fixed position the shift rod 61 can be axially moved.

As shown in Fig. 5, a shaft end portion of the second shaft 22 is provided with an output gear 76 for transmitting the rotation of the second shaft 22 to a differential gear 80.

The differential gear 80 is of such a structure in which a ring gear 81 meshed with the output gear 76 is fitted to a differential casing 82 that is rotatably supported by the housing 25, a pair of pinions 84 are fitted to a pinion shaft 83 having opposite end portions rotatably supported by the differential casing 82, and each of those pinions 84 is meshed with a corresponding side gear 85. A shaft end portion of an axle 86 is connected with the pair of the side gears 85.

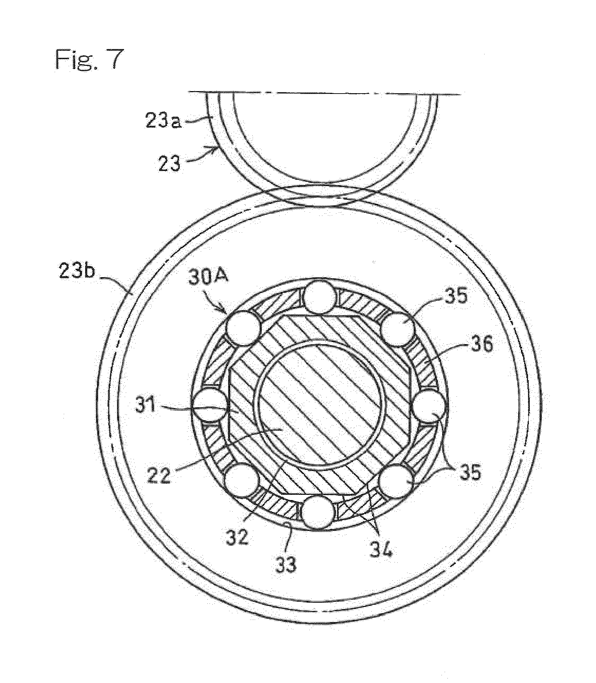

The vehicular motor device A shown and described in connection the foregoing embodiment is of such a construction as hereinbefore described. Fig. 6 illustrates a condition in which the friction plates 52a and 52a are held at the engagement release position at which they are separated away from the first output gear 23b and the second output gear 24b, and the first two-way roller clutch 30A, incorporated inside of the first output gear 23b, and the second two-way roller clutch 30B, incorporated inside of the second output gear 24b, are held in respective engagement release positions as shown in Fig. 7.

Because of that, when the motor 10 is driven and the first shaft 21 is consequently rotated, the rotation thereof is transmitted from the first input gear 23a to the first output gear 23b that is meshed with the first input gear 23a and it is then transmitted from the second input gear 24a to the second output gear 24b that is meshed with the second input gear 24a, but it is not transmitted to the second shaft 22 and, therefore, the first output gear 23b and the second output gear 24b run idle.

In a condition in which the first output gear 23b and the second output gear 24b run idle, a drag torque acts on the respective rollers 35 of the first and second two-way roller clutches 30A and 30B, which are then held in the neutral positions, as a result of contact with the cylindrical surfaces 33, to thereby create a force to rotate the retainer 36.

In such a condition, since the friction plates 52a and 52b, which are non-rotatably retained in the retainer 36 are non-rotatably retained relative to the inner ring 31 by the engagement between the engagement groove 57 and the engagement projection 58, the retainer 36 is also non-rotatably retained relative to the inner ring 31. Because of that, relative rotation between the inner ring 31 and the retainer 36 by the action of the drag torque acting on the rollers 35 is avoided, and, accordingly, an inconvenience in which the first and second two-way roller clutches 30A and 30B is erroneously engaged does not occur.

In the condition in which the first output gear 23b and the second output gear 24b run idle by the drive of the motor 10, when the shift rod 61 is moved in a rightward direction as viewed in this figure by the drive of the motor 68 as shown in Fig. 9, the sleeve 65 and the control ring 51 are moved by the shift fork 63 in the same direction as that in which the shift rod 61 is moved and, by the action of the control ring 51 thereof, the friction plate 52a is urged against the side face of the first output gear 23b.

In this condition, since the engagement between the engagement groove 57 in the friction plate 52a and engagement projection 58 in the spacer 41 is released and, also, since the friction plate 52a is frictionally engaged with the side face of the first output gear 23b, the retainer 36 is held in a condition connected with the first output gear 23b.

For this reason, the retainer 36 in the first two-way roller clutch 30A rotates relative to the inner ring 31, the rollers 35 are engaged with the cylindrical surface 33 and the cam face 34, and the rotation of the first output gear 23b is immediately transmitted to the second shaft 22 through the first two-way roller clutch 30A. Also, the rotation of the second shaft 22 is transmitted to the axle 86 through the differential gear 80.

As a result, in the electrically powered vehicle EV shown in Fig. 4A, the front wheels 1 rotate and, hence, the electrically powered vehicle EV can be driven, and in the hybrid automobile HV shown in Fig. 4B, the rear wheel 2 rotate as the auxiliary driven wheel and the drive of the front wheels 1 is assisted thereby.

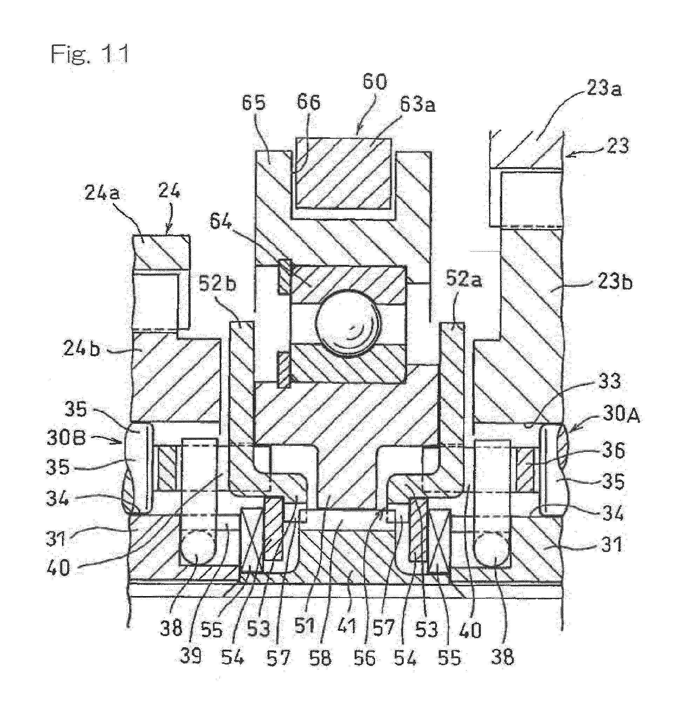

When the inner ring 31 and the retainer 36 undergo a relative rotation, the switch spring 38 undergoes an elastic deformation. For this reason, when the control ring 51 is moved in the direction, in which it is separated away from the first output gear 23b, by rotating the motor 68 in a direction opposite to that described above and moving the shift rod 61 in a direction (a leftward direction as viewed in Fig. 9) reverse to that described above, by the restoring elasticity of the elastic member 55 best shown in Fig. 11 the friction plate 52a is separated away from the first output gear 23b and, at the same time, by the restoring elasticity of the switch spring 38, the retainer 36 is returned to rotate, the rollers 35 are returned to the neutral position and the rotation transmission from the first shaft 21 to the second shaft 22 is immediately interrupted.

When the shift rod 61 is further moved in that direction (the leftward direction as viewed in Fig. 9), by the push of the control ring 51 the frictional plate 52b is urged against the side face of the second output gear 24b and the frictional engagement takes place therebetween.

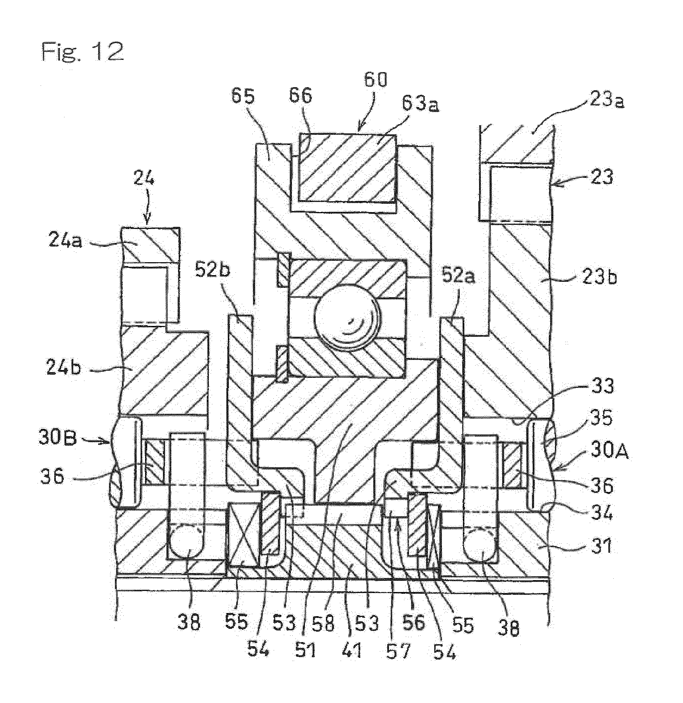

For this reason, the retainer 36 in the second two-way roller clutch 30B is rotated relative to the inner ring 31, the rollers 35 are brought into engagement with the cylindrical surface 33 and the cam face 34, the rotation of the second output gear 24b is immediately transmitted to the second shaft 22 through the second two-way roller clutch 30B, and, hence, the torque transmission path is immediately switched. Fig. 12 illustrates the speed changing condition carried out in the manner described above.

As hereinabove described, by driving the motor 68 as an actuator to thereby axially move the shift rod 61, the first two-way roller clutch 30A or the second two-way roller clutch 30B is brought immediately into engagement and disengagement and, therefore, the switching of the speed change may be accomplished quickly.

As shown in and by the foregoing embodiment, when construction is so made that the control ring 51 and the two friction plates 52a and 52b are incorporated in between the first output gear 23b and the second output gear 24b, one of the friction plates 52a is non-rotatably retained in the retainer 36 in the first two-way roller clutch 30A while the other of the friction plates 52b is non-rotatably retained in the retainer 36 in the second two-way roller clutch 30B, the control ring 51 referred to above is made shiftable in leftward and rightward directions by the shift mechanism 60, and the two sets of the two-way roller clutches 30A and 30B can be controlled to engage and release by means of the single change gear ratio selector mechanism 50, the motor drive device can be downsized.

Although not shown in the drawings, a rolling bearing may be incorporated in between the friction plates 52a and 52b and the opposed surfaces of the control ring 51. With the rolling bearing so incorporated, the frictional resistance which acts at an area of contact between the friction plates 52a and 52b and the control ring 51 can be reduced. For this reason, at the time of engagement, in which the friction plates 52a and 52b are urged against the first output gear 23b and the second output gear 24b to establish the frictional engagement, the friction plates 52a and 52b can be smoothly rotated relative to the control ring 51 and the two-way roller clutch 30A and 30B can be assuredly engaged.

Although in describing the foregoing embodiment, the cylindrical surface 33 has been shown and described as formed in the inner peripheries of the first output gear 23b and the second output gear 24b and the cam face 34 has been shown and described as formed in the outer periphery of the inner ring 31 that is incorporated inside of each of the output gears 23b and 24b, the cam face may be formed in the inner periphery of the first output gear 23b and the second output gear 24 and the cylindrical surface may be formed in the outer periphery of the inner ring. In this case, the switch spring 38 is incorporated in between the first output gear 23b and the second output gear 24b and the retainer 36 so that the retainer 36 can be elastically retained to allow the rollers 35 to assume the neutral position.

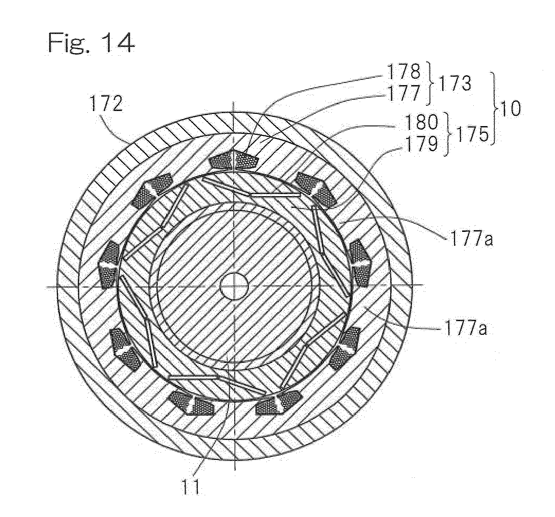

Referring to Fig. 14, the motor 10 is employed in the form of a radial gap type IPM motor having a radial gap defined between a motor stator 173, fixed to a cylindrical motor housing 172, and a motor rotor 175 fitted to an output shaft 11.

The motor stator 173 is made up of a stator core portion 177, made of a soft magnetic material, and a coil 178. The stator core portion 177 has its outer peripheral surface mounted in an inner peripheral surface of the motor housing 172 and is held by the motor housing 172. The motor rotor 175 is made up of a rotor core portion 179, externally mounted on the output shaft 11 in coaxial relation to the motor stator 173, and a plurality of permanent magnets 180 built in the rotor core portion 179. Those permanent magnets 180 are arranged in a V-shaped pattern.

Although in describing the foregoing embodiment the speed reducer 20 has been shown and described as a two stage switching type including two stage gear trains 23 and 24, the speed reducer may have three or more gear trains each having a fixed speed reduction ratio and having different speed reduction ratios, with torque transmission paths being changeable among those three or more gear trains. In such case, of the three or more gear trains, with respect to the gear train on the large speed reduction ratio side and the gear train on the small speed reduction ratio side, which have different speed reduction ratios and differ from each other only by one stage, the driving force curve of the gear train on the large speed reduction ratio side and the driving force curve of the gear train on the small speed reduction ratio side have respective speed reduction ratios that continue to each other with an overlapping portion in the gradually decreasing torque curve section. Also, although in describing the foregoing embodiment, a mechanism for switching the torque transmission path between the plurality of the gear trains of the speed reducer 20 has been shown and described as employed in the form of the roller clutches 30A and 30B, a dog clutch (not shown) may be alternatively employed as a clutch employed for the switching mechanism.

Although the present invention has been fully described in connection with the embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1, 2: Vehicle wheel
- 10: Electric motor
- 20: Speed reducer
- 21: First shaft
- 22: Second shaft
- 23: First speed reduction gear train
- 24: Second speed reduction gear train
- 30A: First two-way roller clutch
- 30B: Second two-way roller clutch
- 50: Change gear ratio selector mechanism
- 80: Differential gear
- L, L1, L2: Driving force curve
- L1a, L2a: Constant torque curve section
- L1b, L2b: Gradually decreasing torque curve section
- L1c, L2c: Constant speed curve section
- Lba: Overlapping portion
- H: High efficiency region

## Claims

1. A vehicular motor drive device comprising:
an electric motor; and
a speed reducer interposed in a torque transmission system provided between the electric motor and a vehicle wheel, the speed reducer including a mechanism to switch the torque transmission path among a plurality of gear trains having different speed reduction ratios, each of the gear trains having a fixed speed reduction ratio;
wherein driving force curves that are determined depending on an output characteristic of the motor, each of those driving force curves representing a relationship between an output rotation speed in the respective gear train and an output torque, which is obtainable maximally at the output rotation speed, each driving force curves including a constant torque curve section, in which a maximum torque that is maximal as a respective gear train output of the respective gear train, is sustained, during a period ranging from the zero output rotation speed to a certain predetermined torque decrease start speed; a gradually decreasing torque curve section, in which the output torque gradually decrease as the output rotation speed increases, during a period ranging from the torque decrease start speed to the maximum rotation speed; and a constant speed curve section, in which the output torque attains the minimum value and the output rotation speed attains constant, at the maximum rotation speed; and
wherein the gear trains have respective speed reduction ratios such that the driving force curve of a gear train having a larger speed reduction ratio and the driving force curve of a gear train having a smaller speed reduction ratio continue to and partially overlap with each other in the gradually decreasing torque curve sections.

2. The vehicular motor drive device as claimed in claim 1, wherein the mechanism to switch the torque transmission path among the plurality of the gear trains of the speed reducer is a change gear ratio selector mechanism operable to switch the torque transmission path through selective engagement and disengagement of a clutch.

3. The vehicular motor drive device as claimed in claim 2, wherein the clutch includes a roller clutch or a dog clutch.

4. The vehicular motor drive device as claimed in claim 1, further comprising a differential gear operable to divide and transmit an output of the speed reducer to left and right vehicle wheels of a vehicle.

5. The vehicular motor drive device as claimed in claim 1, wherein the motor is an interior permanent magnet synchronous motor.

6. The vehicular motor drive device as claimed in claim 1, wherein the vehicle makes use of the only motor as a travelling drive source.

7. An electrically operated automobile of a type wherein left and right vehicle wheels are driven by the vehicular motor drive device as defined in claim 1.

8. A hybrid automobile wherein one pair of a pair of left and right front vehicle wheels provided at a front of the vehicle, and a pair of left and right rear vehicle wheels provided at a rear of the vehicle, are driven by an engine and the other pair are driven by the vehicular motor drive device as defined in claim 1.
